(19) Europäisches Patentamt

European Patent Office

Office européen des brevets

(11) **EP 0 751 446 B1**

(12) **EUROPÄISCHE PATENTSCHRIFT**

(45) Veröffentlichungstag und Bekanntmachung des Hinweises auf die Patenterteilung:
**10.12.2003 Patentblatt 2003/50**

(51) Int Cl.7: **G05B 19/042**

(21) Anmeldenummer: **96115599.1**

(22) Anmeldetag: **28.09.1996**

(54) **Verfahren und Vorrichtung zur Ueberwachung von Systemeinheiten**

Method and device for monitoring system units

Méthode et dispositif de surveillance d'unités d'un système

(84) Benannte Vertragsstaaten:
**CH DE GB IT LI**

(43) Veröffentlichungstag der Anmeldung:
**02.01.1997 Patentblatt 1997/01**

(73) Patentinhaber: **Maag Pump Systems Textron AG**
**8023 Zürich (CH)**

(72) Erfinder:
• **Brinken, Frank, Dr.**
**6343 Buonas (CH)**
• **Heinen, Michael**
**8049 Zürich (CH)**

• **Blume, Peter, Dr. Ing.**
**8057 Zürich (CH)**

(74) Vertreter: **Troesch Scheidegger Werner AG**
**Patentanwälte**
**Postfach**
**8032 Zürich (CH)**

(56) Entgegenhaltungen:
| | |
|---|---|
| **EP-A- 0 189 021** | **EP-A- 0 264 148** |
| **EP-A- 0 643 345** | **EP-A- 0 675 369** |
| **WO-A-94/11822** | **US-A- 4 086 434** |
| **US-A- 4 622 538** | **US-A- 5 332 366** |
| **US-A- 5 533 413** | |

**Beschreibung**

Die vorliegende Erfindung betrifft ein Verfahren nach dem Oberbegriff des Patentanspruchs 1, eine Vorrichtung zur Durchführung des Verfahrens sowie eine Anwendung des Verfahrens.

Systemeinheiten bzw. Komponenten eines Systems, wie insbesondere Pumpen, werden meist aus Kostengründen tendenziell knapper bzw. für einen deutlich erweiterten Fahrbereich ausgelegt. Damit steigt allerdings auch die potentielle Gefahr eines Ausfalls.

Ein drohender Ausfall kann sich dabei dadurch ankündigen, dass die Überschreitungshäufigkeit von Betriebsfeldgrenzen zunimmt oder das Betriebsfeld sich schleichend verändert. Die Ursachenmöglichkeiten sind vielfältig und reichen, beispielsweise bei Pumpen, von Abnutzung allgemein bis Zusetzen von betriebsrelevanten Fliesskanälen.

Aus der US-5 332 366 ist ein Überwachungssystem für Pumpen bekannt, bei dem verschiedene Systemgrössen der Pumpe aufgezeichnet und in einer am Ort der Pumpe befindlichen Datenverarbeitungsanlage gespeichert werden. Das bekannte System eignet sich jedoch nicht zur Überwachung von einer grossen Anzahl von Pumpen, die sich an verschiedenen, weit auseinander liegenden Orten befinden.

Ein weiteres Überwachungssystem ist aus der EP-0 675 369 bekannt, das sich jedoch nur unwesentlich von demjenigen gemäss US-5 332 366 unterscheidet.

Der vorliegenden Erfindung liegt daher die Aufgabe zugrunde, ein Verfahren anzugeben, bei dem Pumper auf einfache Art und Weise überwacht werden können.

Diese Aufgabe wird durch die in kennzeichnenden Teil des Patentanspruchs 1 angegebenen Massnahmen gelöst. Vorteilhafte Ausgestaltungen der Erfindung, eine Vorrichtung zur Durchführung des Verfahrens sowie eine Anwendung des Verfahrens sind in weiteren Ansprüchen angegeben.

Die Erfindung weist folgende Vorteile auf: Durch die ständige oder periodische Erfassung von verschiedenen Betriebsparametern, im folgenden als Systemgrössen bezeichnet, wird ein frühzeitiges Erkennen eines Betriebsausfalles einer Pumpe erkannt. Dies ist insbesondere bei Grossanlagen von grösster Bedeutung, muss doch auch bereits bei einem kurzfristigen Ausfall einer Pumpe das Gesamtsystem abgeschaltet werden. Daraus entstehen nicht nur meist erhebliche Kosten durch die Ausfallzeit der Gesamtanlage, sondern meist ist mit einem Ausfall auch eine lange Wiederanlaufphase bei der Wiederinbetriebsetzung verbunden.

Eine zentrale Überwachung von Pumpen ist aber auch bei kleineren Anlagen von Vorteil, und zwar insbesondere dann, wenn beispielsweise örtlich kein geschultes Personal für die Betriebsüberwachung der Pumpen zur Verfügung steht. Diesfalls kann eine zentrale Auswerteeinheit beispielsweise bei der Herstellerfirma vorgesehen werden, die gegebenenfalls entsprechende Empfehlungen an den Betreiber abgeben kann.

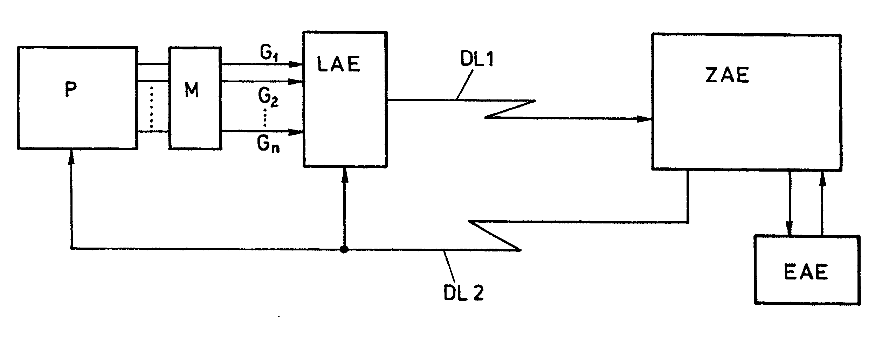

Die Erfindung wird nachfolgend anhand einer Zeichnung beispielsweise näher erläutert. Dabei zeigt die einzige Figur ein prinzipielles Schema der erfindungsgemässen Vorrichtung.

In der einzigen Figur ist schematisch eine erfindungsgemässe Vorrichtung dargestellt, die aus einer Systemeinheit P, einer Messvorrichtung M, einer lokalen Auswerteeinheit LAE, einer zentralen Auswerteeinheit ZAE und einer Ein- und Ausgabeeinheit EAE besteht. Die Systemeinheit P ist diejenige Einheit bzw. Systemkomponente, die zu überwachen ist. Beispielsweise handelt es sich bei der Systemeinheit P um eine Pumpe, die vorzugsweise als Zahnradpumpe ausgeführt ist.

Die Messvorrichtung M ist dabei zur Erfassung von Systemgrössen G1 bis Gn der Systemeinheit P vorgesehen. Aus diesem Grund bestehen, wie aus der Figur ersichtlich ist, zwischen der Messvorrichtung M und der Systemeinheit P mehrere Verbindungen, vorzugsweise entsprechend der Anzahl der zu erfassenden Systemgrössen G1 bis Gn, die ausgangsseitig der Messvorrichtung M erhalten werden und die der lokalen Auswerteeinheit LAE zugeführt werden.

Die Anordnung von Systemeinheit P und Messvorrichtung M ist allgemein bekannt und braucht an dieser Stelle nicht weiter erläutert zu werden.

Wie bereits erwähnt wurde, werden die Systemgrössen G1 bis Gn der lokalen Auswerteeinheit LAE zugeführt, in der eine Verarbeitung vorgenommen wird, wobei verschiedene Verarbeitungsarten denkbar sind. So ist einerseits vorgesehen, dass die Systemgrössen G1 bis Gn ohne direkte weitere Bearbeitung in sogenannten Datenpaketen zusammengefasst über einen Datenkanal DL1 in die zentrale Auswerteeinheit ZAE übertragen werden. Anderseits - und in bevorzugter Weise - ist auch denkbar, dass in der lokalen Auswerteeinheit LAE eine Vorverarbeitung der Systemgrössen G1 bis Gn vorgenommen wird. Damit wird erreicht, dass der Datenkanal DL1 eine geringere Übertragungskapazität aufweisen muss, als wenn alle Systemgrössen G1 bis Gn über den Datenkanal DL1 übertragen werden.

In einer weiteren Ausführungsform der Erfindung ist vorgesehen, dass sowohl die vorverarbeiteten Systemgrössen G1 bis Gn als auch ein Teil der Systemgrössen G1 bis Gn - insbesondere diejenigen, die nicht in die Vorverarbeitung miteinbezogen wurden - über den Datenkanal DL1 in die zentrale Auswerteeinheit AE übertragen werden.

Die zentrale Auswerteeinheit ZAE sammelt und verarbeitet die empfangenen Daten, wobei vorgesehen ist, dass jeweils mehrere lokale Auswerteeinheiten LAE ihre Information an die gleiche zentrale Auswerteeinheit ZAE übertragen.

Der Datenkanal DL1 wird in bekannter Weise beispielsweise über das Telefonnetz, über ein Computernetz oder dgl. aufgebaut.

Ferner ist ein zweiter Datenkanal DL2 vorgesehen, der dazu verwendet wird, Informationen von der zentralen Auswerteeinheit LAE an die lokale Auswerteeinheit AE und/oder an die Systemeinheit P zu senden. Damit besteht die Möglichkeit für eine zentrale Auswerteeinheit ZAE direkt und ohne Verzug auf die lokale Auswerteeinheit LAE und/oder auf die Systemeinheit P einwirken zu können. Denkbar ist beispielsweise, dass in der Systemeinheit P eine Notsituation entsteht, die ein sofortiges Abschalten erforderlich macht, um Systemschädigungen zu vermeiden.

Solche direkten Eingriffe durch die zentrale Auswerteeinheit ZAE sind allerdings eher als Ausnahme anzusehen. Die Überwachung der Systemeinheit P soll nämlich insbesondere zum Ziel haben, einen drohenden Ausfall möglichst frühzeitig zu erkennen, damit mit Hilfe von entsprechenden Massnahmen der Ausfall tatsächlich verhindert werden kann.

Im folgenden wird auf das erfindungsgemässe Verfahren und dabei besonders auf die Vorverarbeitung der Systemgrössen G1 bis Gn in der lokalen Auswerteeinheit LAE als Anwendung bei Zahnradpumpen weiter eingegangen.

Die in den vorangehenden Abschnitten erläuterten Verfahrensschritte eignen sich insbesondere bei der Überwachung von Zahnradpumpen. Als Systemgrössen G1 bis Gn kommen bei dieser Anwendung insbesondere die folgenden messtechnisch bestimmbaren Grössen in Frage:

- Durchfluss
- Leckströme durch die Lager
- Lagertemperatur
- Durchsatzkontrolle, insbesondere durch die Rückführung
- Körperschall
- verschiedene Drücke (insbesondere in der Saugleitung vor der Dichtung, d. h. beispielsweise $\Delta p$ über Pumpe oder $\Delta p$ über Lager aufgrund der Drücke auf der Saugseite, Druckseite und vor der Dichtung)
- Zeiterfassung für die zeitliche Zuordnung
- Drehzahl
- Erfassung der Mischreibung
- Metalldetektor vor und nach der Pumpe
- Viskosität in den charakteristischen Bereichen
- Förderguttemperatur vor und nach der Pumpe
- Antriebsmoment

Aufgrund einer oder mehrerer dieser Systemgrössen ist in der lokalen Auswerteeinheit vorgesehen, Kennzahlen K1 bis K4 zu bestimmen, die eine Aussage über den Betriebszustand der im Einsatz befindlichen Zahnradpumpe erlauben. In einer bevorzugten Ausführungsform der Erfindung ist vorgesehen, lediglich die Kennzahlen K1 bis K4 an die zentrale Auswerteeinheit ZAE zu übertragen. Damit wird an die Übertragungskapazität des Datenkanals lediglich eine geringe Anforderungen gestellt, was wiederum die Anzahl der von einer zentralen Auswerteeinheit ZAE bedienten Systemeinheiten P wesentlich vergrössert.

Aufgrund der Kennzahlen K1 bis K4 ist es der zentralen Auswerteeinheit ZAE möglich, relevante Veränderungen zu detektieren und bereits im Vorfeld eines Schadensfalles entweder Massnahmen zur Vermeidung oder die rechtzeitige Ersatzteilbereitstellung vor Ort einzuleiten.

Die Datenerfassung und Umsetzung zu den noch genauer zu erläuternden Kennzahlen K1 bis K4 erfolgt vorzugsweise permanent, die Weiterleitung der Kennzahlen K1 bis K4 an die zentrale Auswerteeinheit ZAE kann periodisch oder permanent erfolgen.

Die an der Systemeinheit P überwachten physikalischen und/oder technischen und/oder Betriebsgrössen müssen so gewählt sein, das ein reproduzierbarer Zusammenhang zwischen den gemessenen bzw. überwachten Systemgrössen G1 bis Gn und der Interpretation der Kennzahlen K1 bis K4, d.h. letztlich zwischen diesen Systemgrössen G1 bis Gn und der von den Kennzahlen K1 bis K4 ausgelösten Aktion besteht, um Fehlmeldungen respektive Fehlaktionen zur Betriebssituation zu vermeiden.

Es hat sich gezeigt, dass sich eine Überwachung einer Zahnradpumpe besonders dann einwandfrei realisieren lässt, wenn als Kennzahlen K1 bis K4 eine Förderkennzahl K1, welche die Abweichung vom idealen Durchfluss der Pumpe zum idealen Durchfluss in Beziehung setzt, eine energetische Kennzahl K2, welche eine gemessene thermische Energie zur in Folge der Flüssigkeitsreibung umgesetzten Energie in Beziehung setzt, eine Lastkennzahl K3, welche die Lagerbelastung in Beziehung zur Lagertragfähigkeit setzt, und eine Leckpfadkennzahl K4, welche die Differenzdrücke zwischen Saugseite, Druckseite und vor der Dichtung zueinander in Beziehung setzt, gewählt wird.

Für die vorstehend genannten Kennzahlen K1 bis K4 werden die folgenden bevorzugten Relationen eingesetzt:

Für die Förderkennzahl K1

$$K_1 = 1 - \frac{a}{b \cdot c}$$

wobei

a  Leckstrom
b  Drehzahl
c  spezifisches Fördervolumen

ist und wobei unter dem Begriff spezifisches Fördervolumen das pro Umdrehung theoretisch förderbare Fluidvolumen verstanden wird, für die energetische Kennzahl K2

$$K_2 = \frac{a - b \cdot c \cdot d}{e \cdot f \cdot g}$$

wobei

a   Antriebsleistung
b   spezifisches Fördervolumen
c   Differenzdruck
d   Drehzahl
e   Temperaturdifferenz
f   Leckstrom
g   Fördergutkonstante

ist und wobei als Fördergutkonstante g ein Viertel des Produktes aus der Dichte und der Wärmekapazität eingesetzt wird, für die Lagerlastkennzahl K3

$$K_3 = \frac{a \cdot b}{\left\{ \dfrac{c}{d \cdot e} - f \right\} \cdot g}$$

wobei

a   Lagerradialspiel
b   Geometriefaktor
c   Antriebsleistung
d   Drehzahl
e   Differenzdruck
f   spezifisches Fördervolumen
g   Sommerfeldzahl

ist und wobei der Geometriefaktor b folgendermassen definiert ist:

$$b = \frac{h \cdot i \cdot k \cdot l}{m}$$

wobei

h   Achsabstand
i   Zahnradbreite
k   $\Pi^3$ (Kreiszahl im Kubik)
l   (Lagerdurchmesser)$^3$
m   (Lagerbreite)$^2$

ist, und für die Leckpfadkennzahl K4

$$K_4 = \frac{a - b}{c - d}$$

wobei

a   Druck hinter Lager (d.h. vor Dichtung)
b   Saugdruck
c   druckseitiger Druck

ist.

**Patentansprüche**

1. Verfahren zur Überwachung des Betriebszustandes einer Zahnradpumpe, wobei das Verfahren darin besteht,

   - dass Systemgrössen (G1, ..., Gn) mit einer Messvorrichtung (M) bestimmt werden,

   - dass mindestens zwei Systemgrössen (G1, ..., Gn) in einer lokalen Auswerteinheit (LAE) zu einer oder mehrerer Kennzahlen (K1, ..., K4) verarbeitet werden,

   - dass mindestens die in der lokalen Auswerteinheit (LA) berechneten Kennzahlen (K1, ..., K4) zu einer zentralen Auswerteinheit (ZAE) übertragen werden,

   - dass in der zentralen Auswerteinheit (ZAE), basierend auf der mindestens einen Kennzahl (K1, ..., K4), auf den derzeitigen Betriebszustand der Pumpe (P) und/oder auf mögliche zukünftige Ereignisse in der Pumpe (P) geschlossen wird,

   wobei die eine Kennzahl oder, bei mehreren Kennzahlen (K1, ..., K4), mindestens eine von diesen nach folgenden Vorgaben stimmt wird:

   - eine Förderkennzahl (K1), welche die Abweichung vom idealen Durchfluss der Pumpe (P) zum idealen Durchfluss in Beziehung setzt, und/oder

   - eine energetische Kennzahl (K2), welche eine gemessene thermische Energie zur in Folge der Flüssigkeitsreibung umgesetzten Energie in Beziehung setzt, und/oder

   - eine Lastkennzahl (K3), welche die Lagerbelastung in Beziehung zur Lagertragfähigkeit setzt, und/oder

   - eine Leckpfadkennzahl (K4), welche die Differenzdrücke zwischen Saugseite, Druckseite und vor der Dichtung zueinander in Beziehung setzt.

2. Verfahren nach Anspruch 1, **dadurch gekennzeichnet, dass** die Erfassung der Systemgrössen (G1, .., Gn) permanent erfolgt, wobei die Übertragung der Systemgrössen (G1, ..., Gn) und/oder der Kennzahlen (K1, ..., K4) an die zentrale Auswerteinheit (ZAE) periodisch erfolgt.

**3.** Verfahren nach Anspruch 1 oder 2, **dadurch gekennzeichnet, dass** vier Kennzahlen (K1, ..., K4) bestimmt werden, umfassend die Förderkennzahl (K1), die energetische Kennzahl (K2), die Lastkennzahl (K3) und die Leckpfadkennzahl (K4).

**4.** Verfahren nach einem der Ansprüche 1 bis 3, **dadurch gekennzeichnet, dass** die mindestens eine Kennzahl (K1, ..., K4) in der lokalen Auswerteeinheit (LAE) bestimmt wird und dass die mindestens eine Kennzahl (K1, ..., K4) allein an die zentrale Auswerteeinheit (ZAE) übertragen wird.

**5.** Verfahren nach einem der vorangehenden Ansprüche, **dadurch gekennzeichnet, dass** die zentrale Auswerteeinheit (ZAE) Daten über den Datenkanal (DL1) von der Pumpe (P) und/oder von der lokalen Auswerteeinheit (LAE) erhält als auch gegebenenfalls über einen Datenkanal (DL2) auf die Pumpe (P) und/oder auf die lokale Auswerteeinheit (AE) einwirkt.

**6.** Vorrichtung zur Durchführung des Verfahrens nach einem der Ansprüche 1 bis 5, enthaltend:

- eine zu überwachende Pumpe (P),
- eine an die Pumpe (P) angeschlossene Messvorrichtung (M) zum Bestimmen von Systemgrössen (G1, ..., Gn) der Pumpe (P),
- mindestens eine zentrale Auswerteeinheit (ZAE), welche über mindestens einen Datenkanal (DL1, DL2) mit der Pumpe (P) verbunden ist,
- eine lokale Auswerteeinheit (LAE) in der Nähe der Pumpe (P) und gekoppelt mit der Messvorrichtung (M) zur Aufnahme der Systemgrössen (G1, ..., Gn), und
- mindestens einen Datenkanal (DL1, D12), welcher die lokale Auswerteeinheit (LA) mit der zentralen Auswerteeinheit (ZAE) verbindet,

**dadurch gekennzeichnet, dass** die lokale Auswerteeinheit (LA) Mittel zur Verarbeitung von mindestens zwei Systemgrössen (G1, ..., Gn) zu einer oder mehrerer Kennzahlen (K1, ..., K4) aufweist, wobei diese Kennzahlen (K1, ..., K4) an die zentrale Auswerteeinheit (ZAE) übertragen werden, und dass die zentrale Auswerteeinheit (ZAE) Mittel zur Bestimmung des derzeitigen Betriebszustandes der Pumpe (P) und/oder Mittel zur Bestimmung von möglichen zukünftigen Ereignissen in der Pumpe (P) aufweist, wobei die eine Kennzahl oder, bei mehreren Kennzahlen (K1, ..., K4), mindestens eine von diesen nach folgenden Vorgaben stimmt wird:

- eine Förderkennzahl (K1), welche die Abweichung vom idealen Durchfluss der Pumpe (P) zum idealen Durchfluss in Beziehung setzt, und/oder

- eine energetische Kennzahl (K2), welche eine gemessene thermische Energie zur in Folge der Flüssigkeitsreibung umgesetzten Energie in Beziehung setzt, und/oder

- eine Lastkennzahl (K3), welche die Lagerbelastung in Beziehung zur Lagertragfähigkeit setzt, und/oder

- eine Leckpfadkennzahl (K4), welche die Differenzdrücke zwischen Saugseite, Druckseite und vor der Dichtung zueinander in Beziehung setzt.

**7.** Vorrichtung nach Anspruch 6, **dadurch gekennzeichnet, dass** ein von der zentralen Auswerteeinheit (ZAE) ausgehender Datenkanal (DL2) mit der lokalen Auswerteeinheit (LAE) wirkverbunden ist.

**8.** Anwendung des Verfahrens nach einem der Ansprüche 1 bis 5 zur Überwachung von örtlich verteilten Pumpen zwecks Überwachung des jeweiligen Betriebszustandes und zur Auslösung von entsprechenden Aktionen abhängig vom jeweiligen Betriebszustand.

**Claims**

**1.** Process for monitoring the operating status of a gear pump, where the process comprises:

- that system parameters (G1, ....., Gn) are determined using a measurement device (M),
- that at least two system parameters (G1, ....., Gn) are processed in a local analysis unit (LAE) into one or more indices (K1, ....., K4),
- that at least the indices (K1, ....., K4) calculated in the local analysis unit (LAE) are transferred to a central analysis unit (ZAE),
- that in the central analysis unit (ZAE) on the basis of the at least one index (K1, ....., K4), conclusions can be drawn on the current operating status of the pump (P) and/or possible future events in the pump (P),

where the one index, or in the case of several indices (K1, ..... K4) at least one of these, is determined according to the following preconditions:

- an output index (K1) which sets the deviation of the pump (P) from the ideal flow in relation to the ideal flow, and/or
- an energy index (K2) which sets a measured thermal energy in relation to the energy converted due to the fluid friction, and/or
- a load index (K3) which sets the bearing load in relation to the load-bearing capacity, and/or
- a leakage path index (K4) which sets the different pressures between intake side, pressure side and in front of the seal in relation to each other.

2. Process according to claim 1, **characterised in that** the system parameters (G1, ....., Gn) are acquired permanently, whereas the system parameters (G1, ....., Gn) and/or the indices (K1, ....., K4) are transmitted to the central analysis unit (ZAE) periodically.

3. Process according to claim 1 or 2, **characterised in that** four indices (K1, ....., K4) are determined, comprising the output index (K1), the energy index (K2), the load index (K3) and the leakage path index (K4).

4. Process according to any of claims 1 to 3, **characterised in that** the at least one index (K1, ....., K4) is determined in the local analysis unit (LAE) and that the at least one index (K1, ....., K4) is transferred alone to the central analysis unit (ZAE).

5. Process according to any of the previous claims, **characterised in that** the central analysis unit (ZAE) receives data via the data channel (DL1) from the pump (P) and/or from the local analysis unit (LAE) and also where applicable influences the pump (P) and/or the local analysis unit (LAE) via a data channel (DL2).

6. Device for performance of the process according to any of claims 1 to 5, containing:

- a pump to be monitored (P),
- a measurement device (M) connected to the pump (P) to determine system parameters (G1 ....., Gn) of the pump (P),
- at least one central analysis unit (ZAE) which is connected with the pump (P) via at least one data channel (DL1, DL2),
- a local analysis unit (LAE) in the vicinity of the pump (P) and coupled to the measurement device (M) to receive the system parameters (G1, ....., Gn), and
- at least one data channel (DL1, DL2) which connects the local analysis unit (LAE) with the central analysis unit (ZAE),

**characterised in that** the local analysis unit (LAE) has means for processing at least two system parameters (G1, ....., Gn) into one or more indices (K1, ....., K4), where these indices (K1, ....., K4) are transferred to the central analysis unit (ZAE), and that the central analysis unit (ZAE) has means for determining the current operating status of the pump (P) and/or means for determining possible future events in the pump (P), where the one index, or in the case of several indices (K1, ....., K4) at least one of these, is determined according to the following preconditions:

- an output index (K1) which sets the deviation of the pump (P) from the ideal flow in relation to the ideal flow, and/or
- an energy index (K2) which sets a measured thermal energy in relation to the energy converted due to fluid friction, and/or
- a load index (K3) which sets the bearing load in relation to the load-bearing capacity, and/or
- a leakage path index (K4) which sets the different pressures between intake side, pressure side and in front of the seal in relation to each other.

7. Device according to claim 6, **characterised in that** one data channel (DL2) leading from the central analysis unit (ZAE) is actively connected with the local analysis unit (LAE).

8. Use of the process according to any of claims 1 to 5 to monitor spatially distributed pumps for the purpose of monitoring the current operating status and triggering corresponding actions depending on the operating status concerned.

## Revendications

1. Procédé pour le contrôle de l'état de fonctionnement d'une pompe à engrenages, le procédé comprenant :

- le fait que les paramètres du système (G1, ....., Gn) sont déterminés en utilisant un appareil de mesure (M),
- le fait qu'au moins deux paramètres du système (G1, ....., Gn) sont traités dans une unité d'analyse locale (LAE) de manière à obtenir un ou plusieurs indices (K1, ....., K4),
- le fait qu'au moins les indices (K1, ....., K4) calculés dans l'unité d'analyse locale (LAE) sont transférés à une unité d'analyse centrale (ZAE),
- le fait que dans l'unité d'analyse centrale (ZAE), en se basant sur l'un au moins des indices (K1, ....., K4), des conclusions peuvent être tirées concernant l'état de fonctionnement courant de la pompe (P) et/ou les événements pouvant se produire à l'avenir dans la pompe (P),

l'indice, ou dans le cas de plusieurs indices (K1, .....,

K4) au moins un de ceux-ci, étant déterminé selon les conditions requises ci-dessous :

- un indice de refoulement (K1) qui définit l'écart de la pompe (P) par rapport au débit idéal relativement au débit idéal, et/ou
- un indice énergétique (K2) qui définit une énergie thermique mesurée relativement à l'énergie convertie en raison du frottement du liquide, et/ou
- un indice de charge (K3) qui définit la charge sur les paliers relativement à la limite de charge, et/ou
- un indice de trajet de fuite (K4) qui définit les différentes pressions entre le côté admission, le côté refoulement et devant le joint d'étanchéité, l'une relativement à l'autre.

2. Procédé selon la revendication 1, **caractérisé en ce que** les paramètres du système (G1, ....., Gn) sont acquis en permanence, les paramètres du système (G1, ....., Gn) et/ou les indices (K1, ...... K4) étant transmis périodiquement à l'unité d'analyse centrale (ZAE).

3. Procédé selon la revendication 1 ou 2, **caractérisé en ce que** quatre indices (K1, ....., K4) sont déterminés, comprenant l'indice de refoulement (K1), l'indice énergétique (K2), l'indice de charge (K3) et l'indice de trajet de fuite (K4).

4. Procédé selon toute revendication de 1 à 3, **caractérisé en ce que** l'un au moins des indices (K1, ....., K4) est déterminé dans l'unité d'analyse locale (LAE) et **en ce que** l'un au moins des indices (K1, ....., K4) est transféré seul à l'unité d'analyse centrale (ZAE).

5. Procédé selon toute revendication précédente, **caractérisé en ce que** l'unité d'analyse centrale (ZAE) reçoit les données via la voie de données (DL1) à partir de la pompe (P) et/ou de l'unité d'analyse locale (LA E) et aussi, le cas échéant, influence la pompe (P) et/ou l'unité d'analyse locale (LAE) via une voie de données (DL2).

6. Dispositif pour la mise en oeuvre du procédé selon toute revendication de 1 à 5, comprenant :

- une pompe à contrôler (P),
- un appareil de mesure (M) connecté à la pompe (P) pour déterminer les paramètres du système (G1, ....., Gn) de la pompe (P),
- au moins une unité d'analyse centrale (ZAE) connectée à la pompe (P) via au moins une voie de données (DL1, DL2),
- une unité d'analyse locale (LAE) située à proximité de la pompe (P) et couplée avec l'appareil de mesure (M) pour recevoir les paramètres du système (G1, ....., Gn), et
- au moins une voie de données (DL1, DL2) qui connecte l'unité d'analyse locale (LAE) à l'unité d'analyse centrale (ZAE),

**caractérisé en ce que** l'unité d'analyse locale (LAE) est équipée pour le traitement d'au moins deux paramètres du système (G1, ....., Gn) de manière à obtenir un ou plusieurs indices (K1, ....., K4), ces indices (K1, ...., K4) étant transférés à l'unité d'analyse centrale (ZAE), et **en ce que** l'unité d'analyse centrale (ZAE) est équipée pour déterminer l'état de fonctionnement courant de la pompe (P) et/ou est équipée pour déterminer les événements pouvant se produire à l'avenir dans la pompe (P), l'indice, ou dans le cas de plusieurs indices (K1, ....., K4) au moins un de ceux-ci, étant déterminé selon les conditions requises ci-dessous :

- un indice de refoulement (K1) qui définit l'écart de la pompe (P) par rapport an débit idéal relativement au débit idéal, et/ou
- un indice énergétique (K2) qui définit une énergie thermique mesurée relativement à l'énergie convertie en raison du frottement du liquide, et/ou
- un indice de charge (K3) qui définit la charge sur les paliers relativement à la limite de charge, et/ou
- un indice de trajet de fuite (K4) qui définit les différentes pressions entre le côté admission, le côté refoulement et devant le joint d'étanchéité, l'une relativement à l'autre.

7. Dispositif selon la revendication 6, **caractérisé en ce qu'**une voie de données (DL2) partant de l'unité d'analyse centrale (ZAE) est activement connectée à l'unité d'analyse locale (LAE).

8. Utilisation du procédé selon toute revendication de 1 à 5 pour le contrôle de pompes réparties dans l'espace afin de contrôler l'état de fonctionnement courant et de déclencher les actions correspondantes en fonction de l'état de fonctionnement concerné.

EP 0 751 446 B1